# EUROPÄISCHE PATENTANMELDUNG

(11) **EP 2 006 765 A1**
(43) Veröffentlichungstag der Anmeldung: **24.12.2008**
(21) Anmeldenummer: 07011918.5
(22) Anmeldetag: 18.06.2007
(51) Int. Cl.: G06F 3/048

(54) **Informationsdarstellung während der Anzeige eines laufenden Prozesses**

(71) Anmelder: SIEMENS AKTIENGESELLSCHAFT, 80333 München (DE)
(72) Erfinder: Klose, Ralf, 90518 Altdorf (DE); Rettner, Juliane, 90459 Nürnberg (DE); Wittenberg, Carsten, Dr., 91564 Neuendettelsau (DE)

(57) **Zusammenfassung**

Die Erfindung betrifft ein System zur Interaktion eines Benutzers mit einer Softwareapplikation, wobei as System ein Dialogfenster (2) mit einer Fortschrittsanzeige (1) zur Anzeige eines laufenden Prozesses aufweist. Wenn ein Ereignis (Alarm oder Störung) während des laufenden Prozesses im System geschieht, kann eine Information als Hinweis des Ereignisses generiert werden, wobei das Dialogfenster (2) zur Darstellung der generierten Information derart erweitert werden kann, dass der laufende Prozess durch die Fortschrittsanzeige (1) und der Informationsinhalt im Dialogfenster (2) gleichzeitig dargestellt werden. Die Darstellung der generierten Information wird nie durch das Dialogfenster (2) bedeckt. Der Anwender kann dann eine aktuelle Meldung vom System jeder Zeit wahrnehmen.

## Beschreibung

Die Erfindung betrifft ein System mit einer grafischen Benutzeroberfläche und ein Verfahren zur Darstellung einer Information, wobei ein laufender Prozess durch eine Fortschrittsanzeige auf der Benutzeroberfläche dargestellt ist.

In einem Computer-System oder einem von Computer gesteuerten Automatisierungssystem wird in der Regel während eines Prozesses, wie z.B. eines Kopiervorgangs oder einer Simulation, eine Fortschrittsanzeige in Form eines grafischen Fensters (Progressbox oder Progressbar) zur Anzeige des Verlaufes dieses laufenden Prozesses auf einem Display angezeigt, damit der Prozess ständig unter Überwachung bleibt. Tritt ein unerwarteter Zustand oder ein Ereignis während des Prozesses auf, erscheint üblicherweise eine Message-Box. Zum Beispiel, hat bei einer Installation eine Festplatte keinen ausreichenden Platz, oder ein Downloadvorgang benötigt eine Anwenderentscheidung, da es verschiedene Auswahlmöglichkeiten, z.B. Abbruch, Überscheiben und Umbenennen ..., gibt. Die Message-Box und die Fortschrittsanzeige sind aber eigenständig und werden unabhängig voneinander in verschiedenen Fenstern auf dem Display angezeigt. Häufig kann es vorkommen, dass die Message-Box u.U. hinter dem Fenster, in dem die Fortschrittsanzeige angezeigt ist, rutscht bzw. sich dahinter versteckt und somit auf den ersten Blick nicht zu bemerken oder sichtbar ist. Da der Fortschrittsdialog aber weiterhin im Vordergrund angezeigt wird, wundert sich der Anwender des Systems, dass der Fortschritt des Prozesses nicht weiter zunimmt.

Der Erfindung liegt daher die Aufgabe zugrunde, die Überwachung auf ein System während eines laufenden Prozesses des Systems zu verbessern.

Diese Aufgabe wird erfindungsgemäß durch ein System mit den Merkmalen des Patentanspruchs 1 bzw. durch ein Verfahren mit den Merkmalen des Patentanspruchs 5 gelöst. Die abhängigen Ansprüche betreffen vorteilhafte Weiterbildungen und Ausgestaltungen der Erfindung.

Der Erfindung liegt die Idee zugrunde, Anwendern zu ermöglichen, ein während eines laufenden Prozesses geschehendes Ereignis unmittelbar wahrnehmen zu können. Ein System wird zur Interaktion eines Benutzers mit einer Softwareapplikation ausgebildet, welches dem Benutzer eine grafische Benutzeroberfläche zur Verfügung stellt. Wird ein Prozess im System ausgeführt, kann ein grafisches Dialogfenster oder eine grafische Progressbox mit einer Fortschrittsanzeige zur Anzeige des laufenden Prozesses auf der Benutzeroberfläche dargestellt werden. Dies erfolgt aus der Benutzergewohnheit wie z.B. beim Microsoft-Windows. Falls ein Ereignis während des laufenden Prozesses auftritt, z.B. eine Störung während des Prozesses, ein Fehler im Laufe des Prozesses oder eine Entscheidung vom Benutzer zu treffen ist, wird eine Information - üblicherweise in Form einer Dialogbox - als Hinweis des Ereignisses generiert, wobei das Dialogfenster zur Darstellung der generierten Information derart erweitert werden kann, dass durch das Dialogfenster der Inhalt der Information und die Anzeige des laufenden Prozesses gleichzeitig, z.B. nebeneinander oder übereinander, dargestellt werden. Dadurch ist die generierte Information dem Benutzer bereits am Anfang zugänglich, weil diese Information nie hinter dem vorher angezeigten Dialogfenster versteckt dargestellt wird. Die Überwachung des Systems bzw. des laufenden Prozesses beschränkt sich also nicht ausschließlich auf den aktuellen Vorgang, der durch das Dialogfenster dargestellt ist. Wohingegen der Benutzer eine aktuelle Meldung des Systems jederzeit wahrnehmen kann, auch wenn das Dialogfenster auf der gesamten Anzeigefläche der Benutzeroberfläche erstrecken und im Vordergrund dargestellt wäre.

Gemäß einer vorteilhaften Ausgestaltung der Erfindung wird die Information als Hinweis eines Ereignisses des bereits laufenden Prozesses generiert, wenn ein Ereignis, z.B. ein Fehler oder eine Anforderung auf den laufenden Prozess, im Laufe des Prozesses auftritt. Dadurch kann man diese Meldung des Ereignisses auf den ersten Blick bemerken und dann ohne Verzögerung eine angeforderte Tätigkeit ausführen. Der angehaltene Prozess kann dann zügig weiterlaufen.

Gemäß einer vorteilhaften Ausgestaltung der Erfindung wird zumindest ein weiterer Prozess im System neben dem laufenden Prozess in Betrieb gesetzt, wobei die beiden Prozesse parallel und unabhängig voneinander laufen. Die Information kann als Hinweis eines oben genannten Ereignisses, welches aber im Laufe des weiteren Prozesses geschah, generiert werden, wenn dieser Prozess untergebrochen wurde.

Gemäß einer vorteilhaften Ausgestaltung der Erfindung kann eine Tätigkeitsanforderung (z.B. eine Auswahlentscheidung oder Bestätigung) an den Benutzer durch die Darstellung der Information übermittelt werden. Nachdem der Benutzer seine angeforderte Tätigkeit ausgeführt hat und damit die Tätigkeitsanforderung erfüllt ist, blendet die dargestellte Information automatisch aus. D.h., die temporäre Darstellung der generierten Information wird nur bis zu einem bestimmten Schritt oder eine bestimmte Zeit andauern.

Nachfolgend wird die Erfindung anhand der in den Figuren dargestellten Ausführungsbeispiele näher beschrieben und erläutert. Es zeigen:
- FIG 1: die Fortschrittsanzeige eines laufenden Prozesses im einem grafischen Fenster,
- FIG 2: eine gleichzeitige Darstellung der Fortschrittsanzeige und einer während des Prozesses generierten Information.

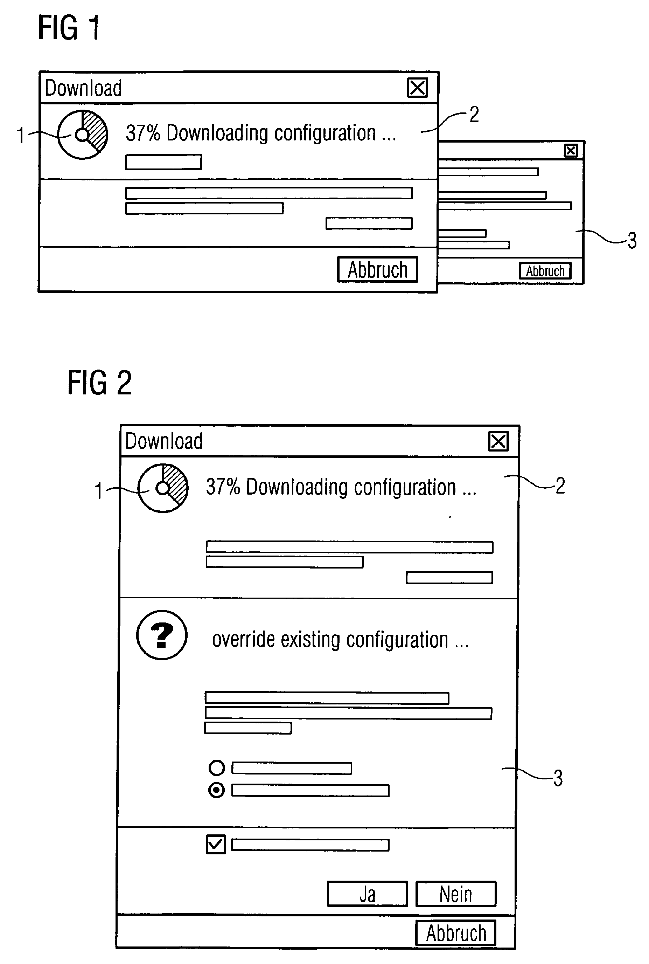

In FIG 1 wird ein grafisches Dialogfenster 2 auf einem Computerbildschirm gezeigt, in diesem Dialogfenster 2 ist eine Fortschrittsanzeige 1 zur Anzeige eines Download-Prozesses dargestellt. Durch diese Fortschrittsanzeige 1 kann die bereits heruntergeladene Datenmenge z.B. in Prozent sehr übersichtlich dargestellt werden. Wenn während des Download-Prozesses ermittelt wird, dass eine Speichereinheit (z.B. Festplatte oder Memory Stick) keine ausreichende Speicherkapazität für die herunterzuladenden Daten hat, wird eine Rückmeldungsinformation bspw. in Form einer Dialogbox 3 automatisch erzeugt und einem Benutzer übermittelt. In diesem Fall kann es vorkommen, insbesondere wenn das Dialogfenster 2 relativ groß oder als Vordergrundfenster eingestellt ist, dass diese erzeugte Dialogbox 3 dann hinter der Progressbox 2 versteckt dargestellt wird. Deswegen kann der Benutzer diese Rückmeldung nicht am Anfang bemerken.

FIG 2 zeigt ein erweitertes Dialogfensters 2 zur Aufnahme der erzeugten Dialogbox 3. Die erzeugte Dialogbox 3 versteckt sich nicht hinter dem Dialogfenster 2 und überschneidet das Dialogfenster 2 auch nicht. Dabei wird das Dialogfenster 2 in FIG 1 so erweitert, dass es die Dialogbox 3 oder den Inhalt der Dialogbox 3 in sich aufnimmt. Dies kann auch so realisiert werden, dass die Dialogbox 3 in das ursprüngliche Dialogfenster 2 integriert dargestellt wird. Dadurch kann dem Benutzer eine Abfrage oder eine Rückmeldungsinformation in das erweiterte Dialogfenster 2 mit der Fortschrittsanzeige 1 zusammen eingeblendet werden. Dabei kann die Form oder die Größe der Fortschrittsanzeige 1 zur Anpassung auf das erweiterte Dialogfenster 2 geändert werden, z.B. von einem Fortschrittsanzeigekreis in einen Fortschrittsanzeigebalken. Somit bleibt dem Benutzer eine umständliche Suche nach der entsprechenden Dialogbox 3 erspart. Er kann ein aktuell geschehenes Ereignis während des laufenden Prozesses am Anfang und auf den ersten Blick sofort wahrnehmen, und weis sofort warum die Fortschrittsanzeige 1 im Dialogfenster 2 auf einem bestimmten Wert stehen bleibt.

## Patentansprüche

1. System zur Interaktion eines Benutzers mit einer Softwareapplikation,
wobei das System ein Dialogfenster (2) mit einer Fortschrittsanzeige (1) zur Anzeige eines laufenden Prozesses aufweist,
wobei eine Information als Hinweis eines Ereignisses, welches während des laufenden Prozesses geschieht, generierbar ist und
wobei das Dialogfenster (2) zur Darstellung der generierten Information derart erweiterbar ist, dass die Anzeige des laufenden Prozesses durch die Fortschrittsanzeige (1) und der Inhalt der Information im Dialogfenster (2) gleichzeitig darstellbar sind.

2. System nach Anspruch 1, wobei
die Information als Hinweis eines Ereignisses des bereits laufenden Prozesses generierbar ist.

3. System nach Anspruch 1, wobei
zumindest ein weiterer Prozess im System neben dem laufenden Prozess in Betrieb setzbar ist, wobei die Information als Hinweis eines Ereignisses des zumindest einen weiteren Prozesses generierbar ist.

4. System nach einem der Ansprüche 1 bis 3, wobei
eine Tätigkeitsanforderung an einen Benutzer des Systems durch die Darstellung der Information im Dialogfenster (2) übermittelbar ist und
wobei die Darstellung der Information nach Erfüllung der Tätigkeitsanforderung automatisch ausblendet.

5. Verfahren zur Darstellung einer Information auf einer Benutzeroberfläche während eines laufenden Prozesses,
wobei der laufende Prozess mittels eines Dialogfenster (2) mit einer Fortschrittsanzeige (1) dargestellt wird,
wobei eine Information als Hinweis eines Ereignisses, welches während des laufenden Prozesses geschieht, generiert wird und
wobei das Dialogfenster (2) zur Darstellung der generierten Information derart erweitert wird, dass die Anzeige des laufenden Prozesses durch die Fortschrittsanzeige (1) und der Inhalt der Information in das Dialogfenster (2) gleichzeitig dargestellt werden.

6. Verfahren nach Anspruch 5, wobei
die Information als Hinweis eines Ereignisses des bereits laufenden Prozesses generiert wird.

7. Verfahren nach Anspruch 5, wobei
zumindest ein weiterer Prozess neben dem laufenden Prozess in Betrieb gesetzt wird und
wobei die Information als Hinweis eines Ereignisses des zumindest einen weiteren Prozesses generiert wird.

8. Verfahren nach einem der Ansprüche 5 bis 7, wobei
eine Tätigkeitsanforderung einem Benutzer durch die Darstellung der Information in das Dialogfenster (2) übermittelt wird und
wobei die Darstellung der Information nach Erfüllung der Tätigkeitsanforderung automatisch ausblendet.
